# EUROPÄISCHE PATENTSCHRIFT

(11) **EP 2 200 900 B1**
(45) Veröffentlichungstag und Bekanntmachung des Hinweises auf die Patenterteilung: **18.09.2013**
(21) Anmeldenummer: 08802618.2
(22) Anmeldetag: 25.09.2008
(51) Int. Cl.: B64D 11/00

(54) **ARBEITSSTATION ZUR INTEGRATION IN EIN LUFTFAHRZEUG, INSBESONDERE HELIKOPTER**
WORKSTATION FOR INTEGRATION IN AN AIRCRAFT, IN PARTICULAR A HELICOPTER
POSTE DE TRAVAIL A INTEGRER DANS UN AERONEF, EN PARTICULIER DANS UN HELICOPTERE

(30) Priorität: 25.09.2007 DE 102007045731
(43) Veröffentlichungstag der Anmeldung: 30.06.2010
(73) Patentinhaber: ESG Elektroniksystem-und Logistik-Gesellschaft mit beschränkter Haftung, D-81675 München (DE)
(72) Erfinder: JOHN, Dieter, 83714 Miesbach (DE); WENGER, Gerhard, 82152 Planegg (DE)
(74) Vertreter: Betten & Resch
(86) Internationale Anmeldenummer: PCT/EP2008/008150
(87) Internationale Veröffentlichungsnummer: WO 2009/040116

(56) Entgegenhaltungen:
- WO-A-02/18207
- FR-A- 2 855 472
- GB-A- 2 430 769
- US-A- 4 913 487
- US-A1- 2003 179 545
- US-A1- 2004 217 676

## Beschreibung

Die vorliegende Erfindung betrifft eine Arbeitsstation zur Integration in ein Luftfahrzeug, wie z.B. einen Helikopter, gemäß dem Oberbegriff des Anspruchs 1.

Eine derartige Arbeitsstation ist aus der WO 2005/025986 A1 bekannt. Bei dieser bekannten Arbeitsstation ist eine Monitoreinheit an einem einen Sitz für die Bedienperson kastenartig umgebenden Träger so getragen, dass sie in eine Arbeitsposition gebracht werden kann und in eine Verstauposition gebracht werden kann. In der Verstauposition ist die Monitoreinheit in einem Seitenlehnenbereich untergebracht, so dass der Zugang zu dem Sitz für die Bedienperson frei ist. An einem anderen Seitenlehnenbereich ist eine Bedienungsbaugruppe einer Handbedieneinheit vorgesehen, über welche die auf einem derartigen Sitz Platz nehmende Person verschiedene Zusatzgeräte an einem Luftfahrzeug, wie z.B. Scheinwerfer, Beobachtungskamera o. dgl., bedienen kann.

Eine Arbeitsstation gemäß dem Oberbegriff des Anspruchs 1 ist aus der GB-A-2 430 769 bekannt, die den nächstliegenden Stand der Technik darstellt. Bei dieser in Form eines Passagiersitzes beispielsweise für ein Flugzeug bereitgestellten Arbeitsstation ist eine Monitoreinheit in einer Rückenlehne des Sitzes schwenkbar angebracht, wobei die Rückenlehne selbst auch schwenkbar an einem die Sitzfläche tragenden Rahmen getragen ist. An dem auch die Sitzfläche tragenden Rahmen ist weiterhin eine in Form eines Keyboards ausgebildete Handbedieneinheit vorgesehen. Sowohl die Monitoreinheit als auch die Handbedieneinheit können in verschiedenen Schwenkpositionen angeordnet werden. Auch die die Monitoreinheit tragende Rückenlehne kann in verschiedenen Schwenkpositionen arretiert werden.

Es ist die Aufgabe der vorliegenden Erfindung, eine Arbeitsstation zur Integration in ein Luftfahrzeug, insbesondere einen Helikopter, vorzusehen, welche bei hoher Funktionalität und Anpassbarkeit insbesondere an verschiedene Bedienpersonen nur wenig Einbauraum beansprucht und somit insbesondere für die Nachrüstung in den Innenraum derartiger Luftfahrzeuge ohne Beeinträchtigung der Sicherheit besonders geeignet ist.

Erfindungsgemäß wird diese Aufgabe gelöst durch eine Arbeitsstation zur Integration in ein Luftfahrzeug, insbesondere Helikopter, umfassend einen Bodenverankerungsbereich zur Verankerung der Arbeitsstation an einem Luftfahrzeugboden, einen an dem Bodenverankerungsbereich im Wesentlichen fest stehenden ersten Trägerbereich, einen an dem ersten Trägerbereich schwenkbar getragenen zweiten Trägerbereich, eine an dem zweiten Trägerbereich schwenkbar getragene Monitoreinheit sowie eine an dem ersten Trägerbereich schwenkbar getragene Handbedieneinheit.

Durch die Aufgliederung in verschiedene schwenkbar aneinander getragene Baugruppen wird es möglich, diese einerseits so zu positionieren, dass sie für eine Bedienperson leicht zugänglich bzw. visuell auch wahrnehmbar sind. Andererseits lässt sich diese Arbeitsstation mit ihren verschiedenen Einheiten sehr leicht in eine Verstauposition bringen, in welcher sie nicht nur sehr wenig Bauraum beansprucht und somit einer Bedienperson auch die Möglichkeit gibt, auf einem im Bereich der Arbeitsstation dann vorgesehenen Luftfahrzeugsitz Platz zu nehmen bzw. auch im Notfall sich aus diesem Sitz wieder herauszubewegen.

Um insbesondere bei Flugmanövem die Gefahr von Verletzungen oder undefinierten Bedienvorgängen vermeiden zu können, ist der zweite Trägerbereich bezüglich des ersten Trägerbereichs in einer Mehrzahl von Schwenkpositionen arretierbar. Diese Mehrzahl von Schwenkpositionen umfasst eine Verstauschwenkposition des zweiten Trägerbereichs.

Um die Monitoreinheit näher an eine Bedienperson heranbewegen zu können bzw. auch wieder entfernen zu können, wird vorgeschlagen, dass der zweite Trägerbereich an dem ersten Trägerbereich um eine zum Bodenverankerungsbereich im Wesentlichen parallele erste Schwenkachse schwenkbar ist. Die auch in Abhängigkeit von der eingestellten Nähe dann vorzunehmende Feinjustierung der Monitoreinheit kann beispielsweise dadurch leicht gewährleistet werden, dass die Monitoreinheit an dem zweiten Trägerbereich um eine zum Bodenverankerungsbereich im Wesentlichen parallele zweite Schwenkachse schwenkbar ist. Der Trägerbereich und die Monitoreinheit können vorzugsweise um zueinander im Wesentlichen parallele Schwenkachsen schwenkbar sein.

Wenn auch die Handbedieneinheit an dem ersten Trägerbereich um eine zum Bodenverankerungsbereich im Wesentlichen parallele dritte Schwenkachse schwenkbar ist, wird auch hinsichtlich dieser Handbedieneinheit eine sehr leichte Anpassbarkeit an verschiedene Betriebssituationen realisiert.

Auch die Monitoreinheit kann vorzugsweise bezüglich des zweiten Trägerbereichs in einer Mehrzahl von Schwenkpositionen arretierbar sein, wobei auch hier diese Mehrzahl von Schwenkpositionen eine Verstauschwenkposition der Monitoreinheit umfassen kann.

Auch für die Handbedieneinheit sind vorzugsweise eine Verstauschwenkposition und wenigstens eine Arbeitsschwenkposition vorgesehen, in welchen Positionen diese bezüglich des ersten Trägerbereichs arretierbar ist, so dass sowohl im Verstauzustand als auch im Arbeitszustand undefinierte und somit gefährliche Bewegungen der Handbedieneinheit ausgeschlossen werden können.

Um die Arretierung der Handbedieneinheit leicht erreichen zu können, wird vorgeschlagen, dass der Handbedieneinheit eine Verstauarretieranordnung zugeordnet ist, welche in der Verstauschwenkposition der Handbedieneinheit diese an dem zweiten Trägerbereich arretiert.

Eine noch feinere Anpassbarkeit der erfindungsgemäßen Arbeitsstation insbesondere an verschiedene Bedienpersonen kann dadurch gewährleistet werden, dass die Handbedieneinheit einen teleskopierbaren Trägerarm umfasst, der in einer Mehrzahl von Teleskopierpositionen arretierbar ist. Um auch hier insbesondere für den Verstauzustand eine definierte Positionierung vorgeben zu können, wird vorgeschlagen, dass die Mehrzahl von Teleskopierpositionen eine Verstauteleskopierposition der Handbedieneinheit umfasst.

Die Handbedieneinheit kann eine an dem Träger schwenkbar getragene Bedienungsbaugruppe umfassen. Auch für diese kann vorgesehen sein, dass sie um eine zum Bodenverankerungsbereich im Wesentlichen parallele Schwenkachse bezüglich des Trägerarms schwenkbar ist. Auch bei der Bedienungsbaugruppe kann für definierte Positionierungen dadurch gesorgt werden, dass die Bedienungsbaugruppe bezüglich des Trägerarms in wenigstens einer Verstauschwenkposition und einer Arbeitsschwenkposition positionierbar ist.

Vorzugsweise ist, um bei der erfindungsgemäßen Arbeitsstation dafür zu sorgen, dass im Verstauzustand alle Baugruppen in definierter Positionierung sind, vorgesehen, dass die Handbedieneinheit an dem zweiten Trägerbereich im Wesentlichen nur bei in der Verstauschwenkposition angeordnetem zweiten Trägerbereich und in der Verstauteleskopierposition angeordneter Handbedieneinheit arretierbar ist. Weiter kann dazu vorgesehen sein, dass die Handbedieneinheit an dem zweiten Trägerbereich im Wesentlichen nur bei in der Verstauschwenkposition bezüglich des Trägerarms positionierter Bedienungsbaugruppe arretierbar ist.

Die vorliegende Erfindung wird nachfolgend mit Bezug auf die beiliegenden Figuren detailliert erläutert. Es zeigt:
- Fig. 1: eine perspektivische Ansicht einer erfindungsgemäß aufgebauten Arbeitsstation;
- Fig. 2: eine andere perspektivische Darstellung der Arbeitsstation ohne Monitoreinheit;
- Fig. 3: eine andere perspektivische Darstellung der Arbeitsstation ohne Monitoreinheit;
- Fig. 4: eine Seitenansicht der in Fig. 1 gezeigten Arbeitsstation, betrachtet in Blickrichtung IV in Fig. 5;
- Fig. 5: eine Frontansicht der in der Fig. 1 gezeigten Arbeitsstation, betrachtet in Blickrichtung V in Fig. 4;
- Fig. 6: eine Seitenansicht der in Fig. 1 gezeigten Arbeitsstation, betrachtet in Blickrichtung VI in Fig. 5.

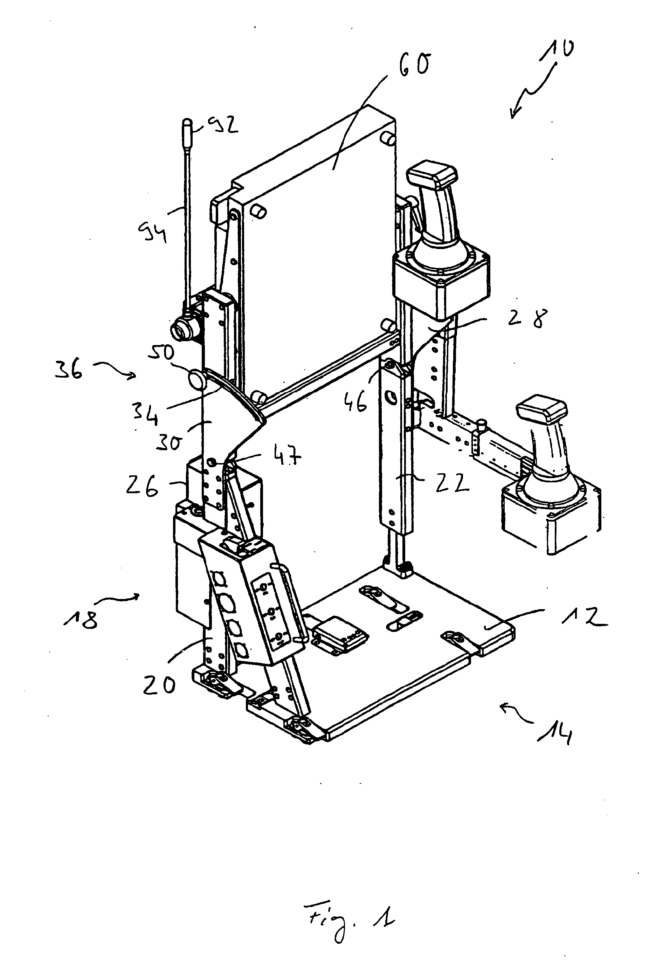

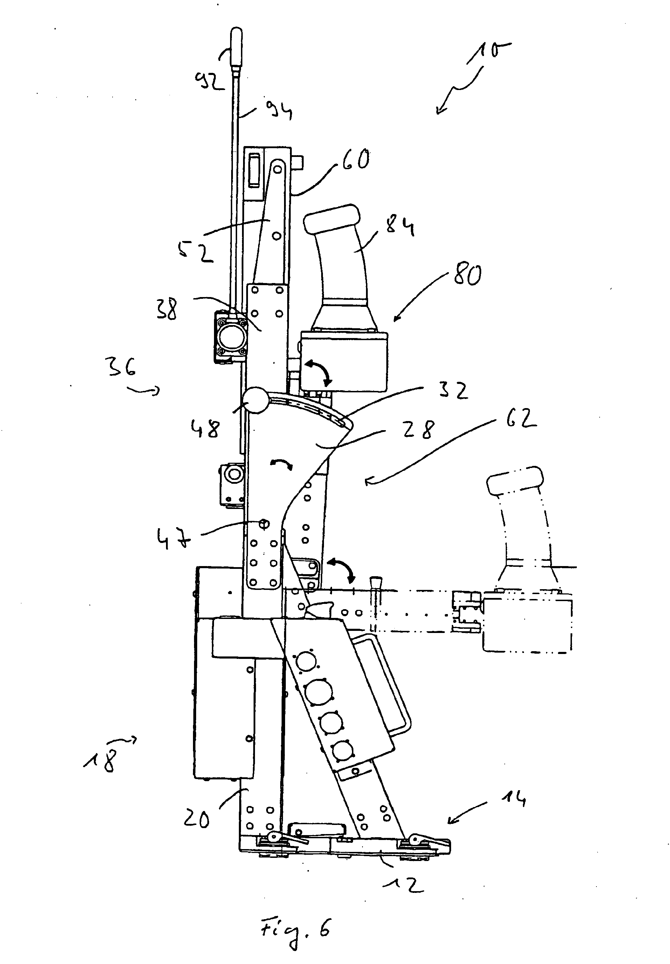

Die in den Fig. 1 bis 6 dargestellte erfindungsgemäß aufgebaute Arbeitsstation 10 ist grundsätzlich zur Integration in ein Luftfahrzeug, insbesondere zur Integration in einen Helikopter vorgesehen. Diese Arbeitsstation 10 wird beispielsweise hinter dem Pilotensitz und dem Kopilotensitz in einem verfügbaren Raum eines Helikopters angeordnet, in welchem auch ein zusätzlicher Sitz für eine mit der Arbeitsstation arbeitende Bedienperson angeordnet werden kann. Vermittels dieser Arbeitsstation 10 können verschiedene am Helikopter vorgesehene Zubehöreinheiten, wie z.B. Kameras, Scheinwerfer, ggf. auch Waffensysteme oder sonstige Überwachungssysteme bedient werden.

Die erfindungsgemäße Arbeitsstation 10 umfasst zur Festlegung am Boden eines Luftfahrzeugs einen mit einer Bodenplatte 12 aufgebauten Bodenverankerungsbereich 14. An dieser Bodenplatte 12 sind verschiedene Befestigungsorgane 16 vorgesehen, die beispielsweise durch Zusammenwirkung mit Schienen am Boden eines Helikopters zur Fixierung der gesamten Arbeitsstation 10 genutzt werden können.

Unmittelbar festgelegt an der Bodenplatte 12 ist ein erster Trägerbereich 18. Dieser umfasst an den beiden seitlichen Endbereichen der Bodenplatte 12 nach oben, also im Wesentlichen orthogonal zur Bodenplatte 12 abstehend, Träger 20, 22, die mit der Bodenplatte 12 z.B. durch Verschraubung fest verbunden sind. Eine beispielsweise mit dem Träger 20 einerseits und der Bodenplatte 12 andererseits fest verbundene Strebe 24 sorgt für zusätzliche Stabilität. Ferner kann an einem der Träger, beispielsweise dem Träger 20, ein schachtelartiges Gehäuse 24 zur Aufnahme weiterer Zubehörteile, wie z.B. eines Videogeräts o.dgl., angeordnet sein.

In ihrem oberen Endbereich tragen die beiden Träger 20, 22 daran fest angebrachte Schwenkarretierplatten 28, 30. Diese sind mit näherungsweise dreieckartiger Konfiguration ausgebildet und weisen in ihrem oberen, über die Träger 20, 22 hinausstehenden Endbereich jeweils langlochartige Öffnungen 32, 34 auf.

Nahe an der Anbindung der Schwenkarretierplatten 28, 30 an die Träger 20, 22 ist am ersten Trägerbereich 18 ein allgemein mit 36 bezeichneter zweiter Trägerbereich schwenkbar getragen. Der zweite Trägerbereich 36 umfasst ebenfalls zwei im Wesentlichen aufrecht angeordnete Träger 38, 40, die in ihrem unteren, also der Schwenkanbindung an den ersten Trägerbereich 18 nahe liegenden Endbereich durch eine Querstrebe 42 miteinander fest verbunden sind. Auch in ihrem oberen Endbereich sind die beiden Träger 38, 40 des zweiten Trägerbereichs 36 durch eine Querstrebe 44 miteinander fest verbunden. In ihren unteren Bereichen sind die beiden Träger 38, 40 vermittels eine erste Schwenkachse A₁ definierenden Schraubbolzen 46, 47 an den Schwenkarretierplatten 28, 30 schwenkbar getragen.

Die langlochartigen Öffnungen 32, 34 sind durch jeweilige Schwenkarretierbolzen 48, 50 durchgriffen, welche weiterhin beispielsweise gewindeartig in die Träger 38, 40 eingreifen. Durch Festdrehen der Schwenkarretierbolzen 48, 50 werden die Träger 38, 40 bezüglich der Schwenkarretierplatten 28, 30 und somit bezüglich des ersten Trägerbereichs 18 arretiert. Durch die langlochartige Ausgestaltung kann hier eine Mehrzahl von Schwenkpositionen gewählt werden, die durch den Winkelbereich zwischen den jeweiligen Endbereichen der langlochartigen Öffnungen 32, 34 begrenzt sind. Die in den Figuren gezeigte Schwenkposition des zweiten Trägerbereichs 36 bezüglich des ersten Trägerbereichs 18, in welcher der zweite Trägerbereich 36 im Wesentlichen aufrecht steht und dessen Träger 38, 40 im Wesentlichen parallel über den Trägern 20, 22 des ersten Trägerbereichs 18 liegen, ist eine Verstauschwenkposition des zweiten Trägerbereichs 36, auf welche nachfolgend noch Bezug genommen wird.

An ihren vom ersten Trägerbereich 18 entfernten Enden tragen die Träger 38, 40 des zweiten Trägerbereichs 36 um eine zweite Schwenkachse A₂ schwenkbar jeweilige Befestigungsplatten 52, 54. Eine dieser Befestigungsplatten, nämlich die in der Darstellung zwar links liegende, kann durch einen Schwenkarretiermechanismus 56, der durch einen Handhebel 58 zu betätigen ist, zur Verschwenkung um die Schwenkachse A₂ freigegeben bzw. gegen Verschwenkung arretiert werden.

Die Fig. 1, 4, 5 und 6 zeigen, dass an den beiden Befestigungsplatten 52, 54 eine allgemein mit 60 bezeichnete Monitoreinheit festgelegt werden kann. Beispielsweise können die Befestigungsplatten 52, 54 an deren seitliche Oberflächen angeschraubt werden. Somit ist zusammen mit den Befestigungsplatten 52, 54 die Monitoreinheit 60 um die zweite Schwenkachse A₂ schwenkbar und auf Grund des Schwenkarretiermechanismus 56 in verschiedenen dieser Schwenkpositionen auch arretierbar. Die in den Fig. 1, 4, 5 und 6 gezeigte Schwenkposition ist dabei eine Verstauschwenkposition, in welcher die Monitoreinheit 60 mit den Trägern 38, 40 des zweiten Trägerbereichs 36 ausgerichtet, also zu diesen etwa parallel liegt und mithin auch parallel über den Trägern 20, 22 des ersten Trägerbereichs 18 liegt.

Aus der vorangehenden Beschreibung erkennt man, dass dann, wenn der zweite Trägerbereich 36 in der Verstauschwenkposition bezüglich des ersten Trägerbereichs 18 ist und darüber hinaus die Monitoreinheit 60 in der Verstauschwenkposition bezüglich des zweiten Trägerbereichs 36 ist, eine insgesamt sehr flach bauende Station erlangt wird, die im Wesentlichen nicht über den durch die Bodenplatte 12 beanspruchten Bauraum hervorspringt.

Die Figuren zeigen weiterhin eine Handbedieneinheit 62, mittels der eine mit der Arbeitsstation 10 arbeitende Bedienperson die verschiedenen zu betätigenden Zubehöreinheiten bedienen kann. Die Handbedieneinheit 62 umfasst einen Trägerarm 64, der zwei bezüglich einander in ihrer Längsrichtung teleskopierbare Armabschnitte 66, 68 umfasst. Ein an dem Armabschnitt 68 beispielsweise vorgesehener Teleskopierarretiermeachismus umfasst einen federvorgespannten Arretierbolzen 72, der in entsprechende Löcher 74 im anderen Armabschnitt 66 eingreifen kann und somit diese beiden Armabschnitte 66, 68 und mithin den Trägerarm 64 in einer Vielzahl von Teleskopierpositionen arretieren kann.

Der Armabschnitt 66 des Trägerarms 64 ist durch einen eine dritte Schwenkachse A₃ definierenden Schraubbolzen 76 am Träger 22 des ersten Trägerbereichs 18 um die dritte Schwenkachse A₃ schwenkbar getragen. Man erkennt, dass alle drei Schwenkachsen A₁, A₂ und A₃ zueinander im Wesentlichen parallel liegen.

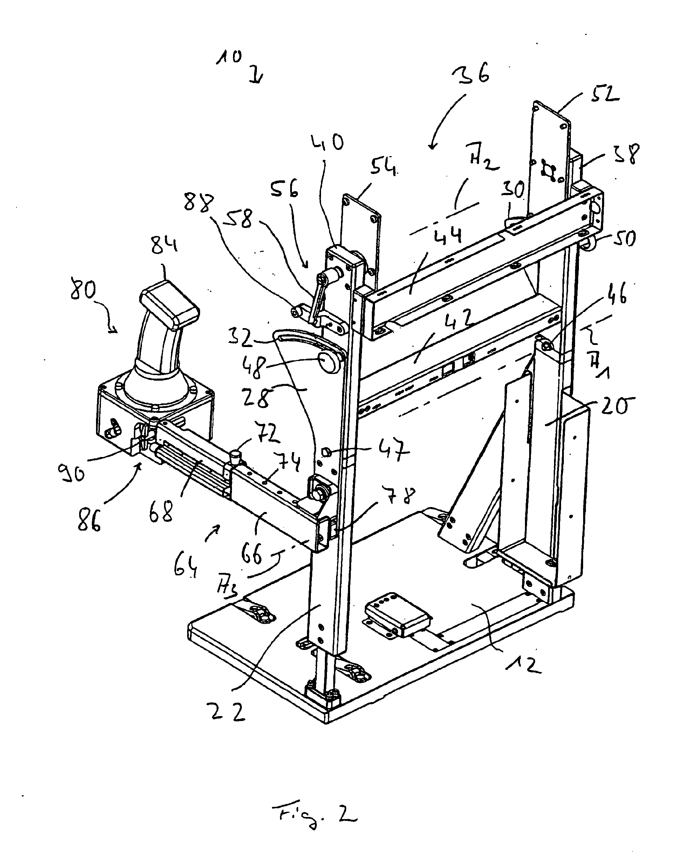

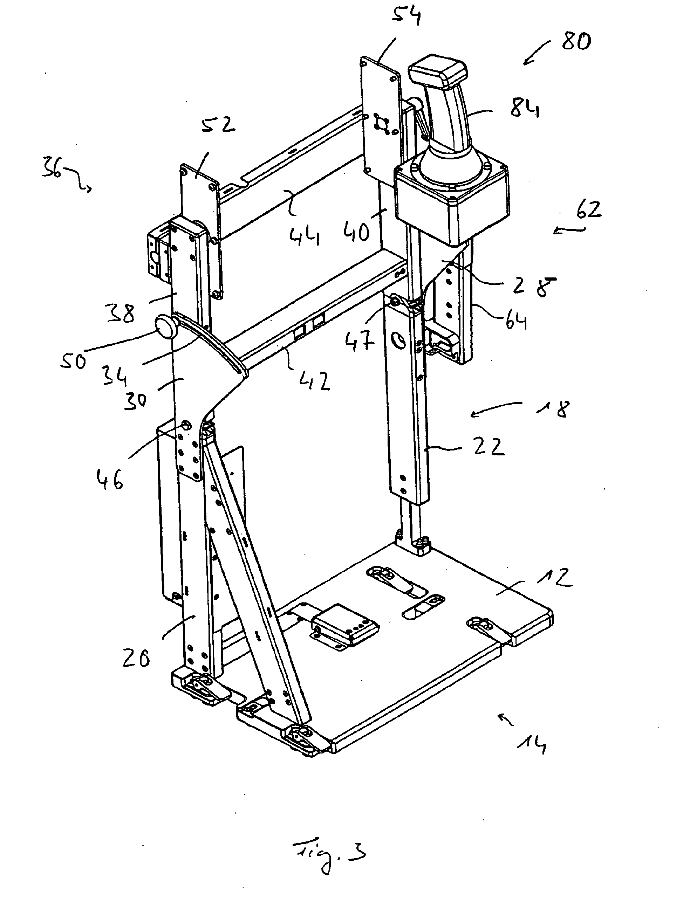

Die Handbedieneinheit 62 ist bezüglich des ersten Trägerbereichs 18 bzw. auch des zweiten Trägerbereichs 36 in einer in der Fig. 2 erkennbaren Arbeitsschwenkposition arretierbar. In dieser Arbeitsschwenkposition erfolgt die Arretierung durch die Anlage des Trägerarms 64 an einem am Träger 22 getragenen Bewegungsanschlag 78 und Schwerkrafteinwirkung. Auch hier könnte zusätzlich beispielsweise durch einen Verriegelungsbolzen eine weitere Arretierfunktion erlangt werden. Grundsätzlich ist jedoch die schwerkraftbedingte Arretierung durch die feste Anlage am Bewegungsanschlag 78 ausreichend und gewährleistet ein sehr schnelles Zurückverschwenken in die in Fig. 3 erkennbare Verstauschwenkposition, in welcher der Trägerarm 64 im Wesentlichen parallel zu den Trägern 22 bzw. 40 des ersten Trägerbereichs 18 und des zweiten Trägerbereichs 36 ausgerichtet ist. Auch in dieser Verstauschwenkposition ist der Trägerarm 64 arretierbar, wie nachfolgend noch erläutert.

Am Armabschnitt 68 des Trägerarms 64 ist eine Bedienungsbaugruppe 80 der Handbedieneinheit 62 um eine vierte Schwenkachse A₄ schwenkbar getragen. Diese kann definiert sein durch einen die Bedienungsbaugruppe 80 tragenden Schraubbolzen 82 o.dgl.. Auch die vierte Schwenkachse A₄ steht parallel zu den anderen Schwenkachsen A₁, A₂ und A₃.

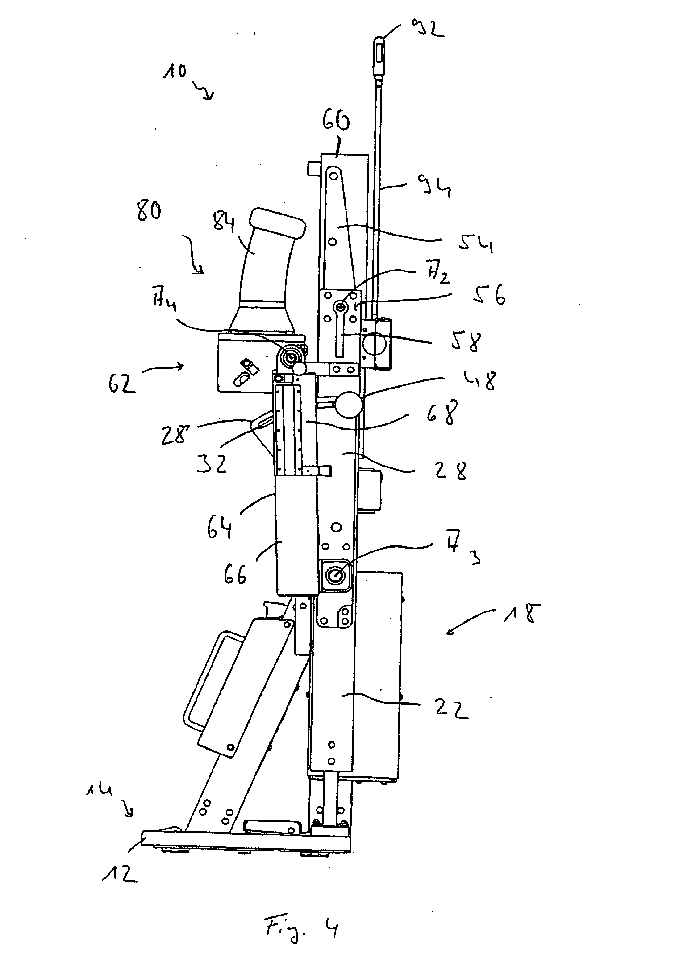

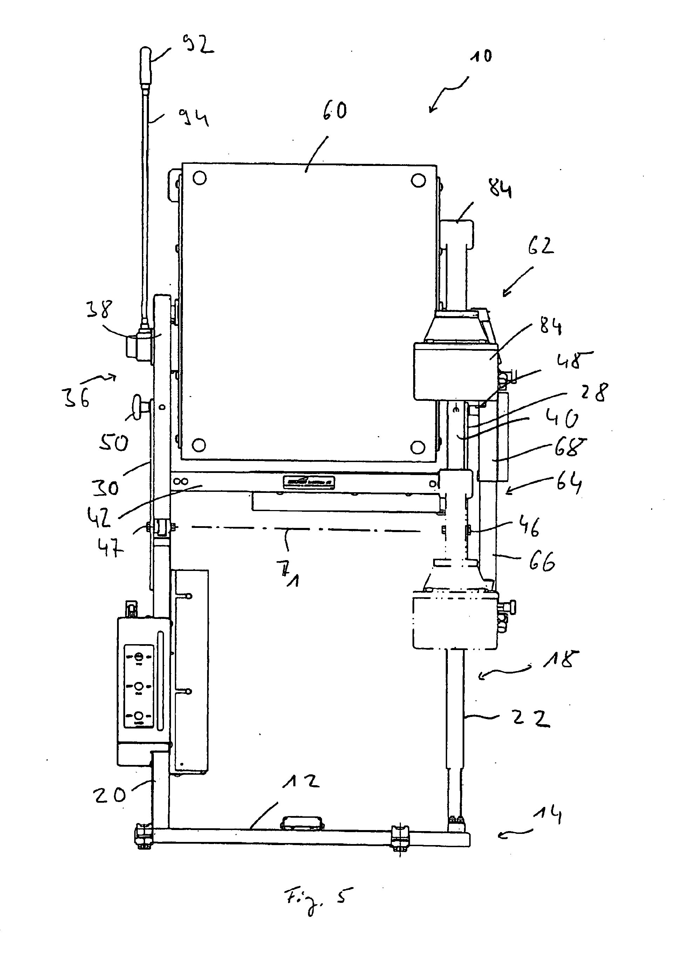

Die Bedienungsbaugruppe 80 ist bezüglich des Armabschnitts 68 und somit bezüglich des Trägerarms 64 in mehreren Schwenkpositionen arretierbar. Hierzu dient ein Arretiermechanismus 81, welcher durch einen in Fig. 5 erkennbaren Bedienknopf 83 zum Freigeben der Bedienungsbaugruppe 80 zu drückenden Knopf 83 auflösbar ist. Die in Fig. 2 gezeigte Schwenkposition ist eine von mehreren möglichen Arbeitsschwenkpositionen, in welcher ein durch eine Bedienperson zu manipulierender und die Bedienbefehle aufnehmender Handgriff 84 im Wesentlichen aufrecht steht, sich also näherungsweise orthogonal zum Trägerarm 64 erstreckt. Die in Fig. 3 und auch in Fig. 4 erkennbare Schwenkposition ist eine Verstauschwenkposition, in welcher die Bedienungsbaugruppe 80 bezüglich der Arbeitsschwenkposition um etwa 90° verschwenkt ist, so dass nunmehr der Handgriff 84 näherungsweise in Verlängerung des Trägerarms 64 liegt. In dieser Verstauschwenkposition der Bedienungsbaugruppe 80 kann eine an dieser vorgesehene Verstauarretieranordnung 86 mit einem an dem zweiten Trägerbereich vorgesehenen bolzenartigen Gegenstück 88 zur Arretierung der Bedienungsbaugruppe 80 bezüglich des zweiten Trägerbereichs 36 und somit zur Arretierung der Handbedieneinheit 62 in der Verstauarretierposition zusammenwirken. Hierzu ist es jedoch erforderlich, zunächst den zweiten Trägerbereich 36 in seine in den Figuren erkennbare Verstauschwenkposition bezüglich des ersten Trägerbereichs 18 zu bringen und den Trägerarm 64 in seine beispielsweise vollkommen ausgefahrene Verstauteleskopierposition zu bringen. Somit ist sichergestellt, das die Verstauarretieranordnung 86 mit dem bolzenartigen Gegenstück 88 so zusammenwirken kann, dass die Handbedieneinheit 62 zuverlässig an dem zweiten Trägerbereich 36 arretiert ist. Hierzu kann es weiterhin erforderlich sein, die Monitoreinheit 60 in ihre Verstauschwenkposition bezüglich des zweiten Trägerbereichs 36 zu bringen, so dass die in der Verstauschwenkposition der Handbedieneinheit 62 die Monitoreinheit 60 bereichsweise überdeckende Bedienungsbaugruppe 80 (siehe Fig. 5) sich nicht gegenseitig mit der Monitoreinheit 60 stört bzw. diese beim Hochschwenken der Handbedieneinheit 62 nicht beschädigt.

Die Verstauarretieranordnung 86 kann beispielsweise mit einem in den Figuren nicht dargestellten Arretierabschnitt ausgebildet sein, welcher in der Verstauschwenkposition der Handbedieneinheit 62 das bolzenartige Gegenstück 88 hintergreift und beispielsweise durch eine Abweisschräge entgegen Federvorspannung beim Hochschwenken der Handbedieneinheit in diese das Gegenstück 88 hintergreifende Positionierung gelangt. Durch Ziehen an einem Handgriff 90 kann dieser Hintergriff gelöst werden, um den Trägerarm 64 bzw. die Handbedieneinheit 62 nach unten in die Arbeitsschwenkposition zu bringen. Ein ähnlicher Mechanismus kann auch dazu genutzt werden, die Bedienungsbaugruppe 80 in ihren beiden vorgesehenen Schwenkpositionen bezüglich des Armabschnitts 68 zu arretieren bzw. die Arretierung lösen zu können.

Durch die vorliegende Erfindung ist eine Arbeitsstation zu Integration in ein Luftfahrzeug, also beispielsweise einen Helikopter vorgesehen, die bei hoher Flexibilität der verschiedenen Baugruppen grundsätzlich nur sehr wenig Bauraum beansprucht. Gleichwohl ist durch die Verschwenkbarkeit des zweiten Trägerbereichs bezüglich des ersten Trägerbereichs die Möglichkeit gegeben, die Monitoreinheit mehr oder weniger nahe an die auf einem Sitz sitzende Bedienposition heranzubringen. Durch die Verschwenkbarkeit der Monitoreinheit bezüglich des zweiten Trägerbereichs wird dann gewährleistet, dass in verschiedenen Schwenkpositionen des zweiten Trägerbereichs die Bedienperson die Monitoreinheit jeweils auch möglicherweise abhängig vom Lichteinfall in optimaler Weise beobachten kann. Die Teleskopierbarkeit des Trägerarms der Handbedieneinheit gewährleistet weiterhin eine ergonomische Bedienbarkeit durch verschiedene Bedienpersonen verschiedener Größe.

Da bei der erfindungsgemäßen Arbeitsstation die beiden Trägerbereiche bezüglich einander, die Monitoreinheit bezüglich des zweiten Trägerbereichs und die Handbedieneinheit bezüglich des zweiten Trägerbereichs jeweils in einer Verstauschwenkposition arretierbar sind, ist weiterhin für hohe Sicherheit zum Ein- bzw. Ausstieg für die Bedienperson, insbesondere im Notfall, gesorgt. In dieser Situation ist der zweite Trägerbereich bezüglich des ersten Trägerbereichs durch Reibschluss, nämlich durch Festklemmen der Schwenkarretierplatten an den jeweils zugeordneten Trägern arretiert. Auch die Monitoreinheit ist durch Reibklemmwirkung arretiert. Die Handbedieneinheit ist durch Formschluss bezüglich des zweiten Trägerbereichs arretiert und auch die Bedienungsbaugruppe ist vorzugsweise durch Formschluss bezüglich des Trägerarms arretiert. Es ist selbstverständlich, dass dort, wo bei der gezeigten Ausgestaltungsform reibschlüssig wirkende Arretieranordnungen bzw. Mechanismen wirken, auch formschlüssig wirkende Anordnungen eingesetzt werden können.

Es ist selbstverständlich, dass an der erfindungsgemäßen Arbeitsstation 10 noch weitere Zubehöre oder Variationen vorgesehen sein können. So kann, wie die Fig. 4 bis 6 dies zeigen, eine Lampe 92 vorgesehen sein, die an einem flexiblen Träger 94 getragen und beispielsweise am zweiten Trägerbereich 36 festgelegt ist, so dass beispielsweise im Nachtbetrieb für die Bedienperson auch ausreichend Beleuchtung zur Verfügung steht. Die Monitoreinheit 60 kann beispielsweise als Touchscreen ausgebildet sein oder/und an ihrem Umfangsbereich mit verschiedenen Tasten oder Tastenfeldern ausgestaltet sein, so dass die Bedienperson verschiedene Funktionalitäten ausrufen bzw. auswählen kann. An dem Handhebel 84 der Bedienungsbaugruppe 80 können selbstverständlich verschiedene Bedienknöpfe vorgesehen sein, mit welchen die Bedienperson, ohne die Hand vom Handhebel 84 lösen zü müssen, verschiedene Funktionen auswählen bzw. eine ausgewählte Zubehöreinheit in gewünschter Form betreiben kann.

Es sei abschließend darauf hingewiesen, dass auf Grund der Tatsache, dass die erfindungsgemäße Arbeitsstation in einem Luftfahrzeug einzusetzen ist, diese vorzugsweise aus sehr leichtem Baustoff, wie z.B. Aluminium, aufgebaut ist, dort, wo höhere mechanische Belastungen zu erwarten sind, können Stahlteile oder Stahleinsätze oder andere hochfeste Baustoffe wie z.B. Kohlefaser- oder Glasfaserbaustoffe oder Ähnliches zum Einsatz kommen.

## Patentansprüche

1. Arbeitsstation zur Integration in ein Luftfahrzeug, insbesondere Helikopter, umfassend:
- einen Bodenverankerungsbereich (14) zur Verankerung der Arbeitsstation (10) an einem Luftfahrzeugboden,
- einen an dem Bodenverankerungsbereich (14) im Wesentlichen fest stehenden ersten Trägerbereich (18),
- einen an dem ersten Trägerbereich (18) schwenkbar getragenen zweiten Trägerbereich (36), wobei der zweite Trägerbereich (36) bezüglich des ersten Trägerbereichs (18) in einer Mehrzahl von Schwenkpositionen arretierbar ist,
- eine an dem zweiten Trägerbereich (36) schwenkbar getragene Monitoreinheit (60),
- eine an dem ersten oder dem zweiten Trägerbereich (18; 36) schwenkbar getragene Handbedieneinheit (62),
**dadurch gekennzeichnet, dass** die Mehrzahl von Schwenkpositionen eine Verstauschwenkposition des zweiten Trägerbereichs (36) umfasst.

2. Arbeitsstation nach Anspruch 1,
**dadurch gekennzeichnet, dass** der zweite Trägerbereich (36) an dem ersten Trägerbereich (18) um eine zum Bodenverankerungsbereich (14) im Wesentlichen parallele erste Schwenkachse (A₁) schwenkbar ist.

3. Arbeitsstation nach Anspruch 1 oder 2,
**dadurch gekennzeichnet, dass** die Monitoreinheit (60) an dem zweiten Trägerbereich (36) um eine zum Bodenverankerungsbereich (14) im Wesentlichen parallele zweite Schwenkachse (A₂) schwenkbar ist.

4. Arbeitsstation nach einem der Ansprüche 1 bis 3,
**dadurch gekennzeichnet, dass** der zweite Trägerbereich (36) und die Monitoreinheit (60) um zueinander im Wesentlichen parallele Schwenkachsen (A₁, A₂) schwenkbar sind.

5. Arbeitsstation nach einem der Ansprüche 1 bis 4,
**dadurch gekennzeichnet, dass** die Handbedieneinheit (62) an dem ersten Trägerbereich (18) um eine zum Bodenverankerungsbereich (14) im Wesentlichen parallele dritte Schwenkachse (A₃) schwenkbar ist.

6. Arbeitsstation nach einem der Ansprüche 1 bis 5,
**dadurch gekennzeichnet, dass** die Monitoreinheit (60) bezüglich des zweiten Trägerbereichs (36) in einer Mehrzahl von Schwenkpositionen arretierbar ist.

7. Arbeitsstation nach Anspruch 6,
**dadurch gekennzeichnet, dass** die Mehrzahl von Schwenkpositionen eine Verstauschwenkposition der Monitoreinheit (60) umfasst.

8. Arbeitsstation nach einem der Ansprüche 1 bis 7,
**dadurch gekennzeichnet, dass** die Handbedieneinheit (62) bezüglich des ersten Trägerbereichs (18) in wenigstens einer Arbeitsschwenkposition und einer Verstauschwenkposition arretierbar ist.

9. Arbeitsstation nach Anspruch 8,
**dadurch gekennzeichnet, dass** der Handbedieneinheit (62) eine Verstauarretieranordnung (86) zugeordnet ist, welche in der Verstauschwenkposition der Handbedieneinheit (62) diese an dem zweiten Trägerbereich (36) arretiert.

10. Arbeitsstation nach einem der Ansprüche 1 bis 8,
**dadurch gekennzeichnet, dass** die Handbedieneinheit (62) einen teleskopierbaren Trägerarm (64) umfasst, der in einer Mehrzahl von Teleskopierpositionen arretierbar ist.

11. Arbeitsstation nach Anspruch 10,
**dadurch gekennzeichnet, dass** die Mehrzahl von Teleskopierpositionen eine Verstauteleskopierposition der Handbedieneinheit (62) umfasst.

12. Arbeitsstation nach einem der Ansprüche 1 bis 11,
**dadurch gekennzeichnet, dass** die Handbedieneinheit (62) eine an einem Trägerarm (64) schwenkbar getragene Bedienungsbaugruppe (80) umfasst.

13. Arbeitsstation nach Anspruch 12,
**dadurch gekennzeichnet, dass** die Bedienungsbaugruppe (80) um eine zum Bodenverankerungsbereich (14) im Wesentlichen parallele vierte Schwenkachse (A₄) bezüglich des Trägerarms (64) schwenkbar ist.

14. Arbeitsstation nach Anspruch 12 oder 13,
**dadurch gekennzeichnet, dass** die Bedienungsbaugruppe (80) bezüglich des Trägerarms (64) in einer Verstauschwenkposition und wenigstens einer Arbeitsschwenkposition positionierbar ist.

15. Arbeitsstation nach Anspruch 9 und Anspruch 11, oder einem der Ansprüche 12 bis 14, sofern auf Anspruch 9 und Anspruch 11 rückbezogen,
**dadurch gekennzeichnet, dass** die Handbedieneinheit (62) an dem zweiten Trägerbereich (36) im Wesentlichen nur bei in der Verstauschwenkposition angeordnetem zweiten Trägerbereich (36) und in der Verstauteleskopierposition angeordneter Handbedieneinheit (62) arretierbar ist.

16. Arbeitsstation nach Anspruch 14 und Anspruch 15,
**dadurch gekennzeichnet, dass** die Handbedieneinheit (62) an dem zweiten Trägerbereich (36) im Wesentlichen nur bei in der Verstauschwenkposition bezüglich des Trägerarms (64) positionierter Bedienungsbaugruppe (80) arretierbar ist.

## Claims

1. A workstation for integration in an aircraft, in particular a helicopter, comprising:
- a floor anchoring area (14) for anchoring the workstation (10) on an aircraft floor;
- a first mounting area (18) which is essentially fixed on the floor anchoring area (14);
- a second mounting area (36) which is supported on the first mounting area (18) such that it can pivot, wherein said second mounting area (36) can be locked in a plurality of pivot positions with respect to the first mounting area (18);
- a monitor unit (60) which is mounted on the second mounting area (36) such that it can pivot;
- a manual control unit (62) which is mounted on the first or the second mounting area (18, 36) such that it can pivot.

2. A workstation according to claim 1, **characterized in that** the second mounting area (36) is pivotable on the first mounting area (18) about a first pivoting axis (A₁) essentially parallel to the floor anchoring area (14).

3. A workstation according to claim 1 or 2, **characterized in that** the monitor unit (60) is pivotable on the second mounting area (36) about a second pivoting axis (A₂) essentially parallel to the floor anchoring area (14).

4. A workstation according to one of the claims 1 to 3, **characterized in that** the second mounting area (36) and the monitor unit (60) are pivotable about pivoting axes (A₁, A₂) essentially parallel to each other.

5. A workstation according to one of the claims 1 to 4, **characterized in that** the manual control unit (62) is pivotable on the first mounting area (18) about a third pivoting axis (A₃) essentially parallel to the floor anchoring area (14).

6. A workstation according to one of the claims 1 to 5, **characterized in that** the monitor unit (60) can be locked in a plurality of pivot positions with respect to the second mounting area (36).

7. A workstation according to claim 6, **characterized in that** the plurality of pivot positions includes a stowage pivot position for the monitor unit (60).

8. A workstation according to one of the claims 1 to 7, **characterized in that** the manual control unit (62) can be locked with respect to the first mounting area (18) in at least one working pivot position and a stowage pivot position.

9. A workstation according to claim 8, **characterized in that** a stowage locking arrangement (86) is assigned to the manual control unit (62), which locks it on the second mounting area (36) in the stowage pivot position of the manual control unit (62).

10. A workstation according to one of the claims 1 to 8, **characterized in that** the manual control unit (62) includes a telescoping support arm (64), which can be locked in a plurality of telescoping positions.

11. A workstation according to claim 10, **characterized in that** the plurality of telescoping positions includes a stowage telescoping position for the manual control unit (62).

12. A workstation according to one of the claims 1 to 11, **characterized in that** the manual control unit (62) includes an operating assembly (80) mounted on a support arm (64) such that it can pivot.

13. A workstation according to claim 12 , **characterized in that** the operating assembly (80) is pivotable with respect to the support arm (64) about a fourth pivoting axis (A₄) essentially parallel to the floor anchoring area (14).

14. A workstation according to claim 12 or 13, **characterized in that** the operating assembly (80) can be positioned in a stowage pivot position and at least one working pivot position with respect to the support arm (64).

15. A workstation according to claim 9 and claim 11 or one of claims 12 to 14 if referring back to claim 9 and 11, **characterized in that** the manual control unit (62) can essentially only be locked on the second mounting area (36) with the second mounting area (36) arranged in the stowage pivot position and the manual control unit (62) arranged in the stowage telescoping position.

16. A workstation according to claim 14 and claim 15, **characterized in that** the manual control unit (62) can essentially only be locked on the second mounting area (36) with the operating assembly (80) positioned in the stowage pivot position with respect to the support arm (64).

## Revendications

1. Poste de travail intégrable dans un aéronef, en particulier un hélicoptère, comprenant :
- une zone d'ancrage au plancher (14) pour l'ancrage du poste de travail (10) à un plancher de l'aéronef,
- une première zone de support (18) sensiblement fixe sur la zone d'ancrage au plancher (14),
- une deuxième zone support (36) supportée de manière pivotante sur la première zone de support (18), ladite deuxième zone de support (36) pouvant être fixée dans une pluralité de positions de pivotement par rapport à la première zone de support (18),
- une unité d'écran (60) supportée de manière pivotante sur la deuxième zone de support (36),
- une unité de commande manuelle (62) supportée de manière pivotante sur la première ou la deuxième zone de support (18 ; 36),
**caractérisé en ce que** la pluralité de positions de pivotement comprend une position de pivotement d'arrimage de la deuxième zone de support (36).

2. Poste de travail selon la revendication 1, **caractérisé en ce que** la deuxième zone support (36) est pivotante sur la première zone support (18) autour d'un premier axe de pivotement (A₁) sensiblement parallèle à la zone d'ancrage au plancher (14).

3. Poste de travail selon la revendication 1 ou 2,
**caractérisé en ce que** l'unité d'écran (60) est pivotante sur la deuxième zone de support (36) autour d'un deuxième axe de pivotement (A₂) sensiblement parallèle à la zone d'ancrage au plancher (14).

4. Poste de travail selon l'une des revendications 1 à 3,
**caractérisé en ce que** la deuxième zone de support (36) et l'unité d'écran (60) sont pivotantes autour d'axes de pivotement (A₁, A₂) sensiblement parallèles entre eux.

5. Poste de travail selon l'une des revendications 1 à 4,
**caractérisé en ce que** l'unité de commande manuelle (62) est pivotante sur la première zone de support (18) autour d'un troisième axe de pivotement (A₃) sensiblement parallèle à la zone d'ancrage au plancher (14).

6. Poste de travail selon l'une des revendications 1 à 5,
**caractérisé en ce que** l'unité d'écran (60) peut être fixée dans une pluralité de positions de pivotement par rapport à la deuxième zone de support (36).

7. Poste de travail selon la revendication 6,
**caractérisé en ce que** la pluralité de positions de pivotement comprend une position de pivotement d'arrimage de l'unité d'écran (60).

8. Poste de travail selon l'une des revendications 1 à 7,
**caractérisé en ce que** die unité de commande manuelle (62) peut être fixée dans au moins une position de pivotement de travail et une position de pivotement d'arrimage par rapport à la première zone de support (18).

9. Poste de travail selon la revendication 8,
**caractérisé en ce qu'**un dispositif de fixation d'arrimage (86) est associé à l'unité de commande manuelle (62), lequel fixe celle-ci sur la deuxième zone de support (36) en position de pivotement d'arrimage de l'unité de commande manuelle (62).

10. Poste de travail selon l'une des revendications 1 à 8,
**caractérisé en ce que** l'unité de commande manuelle (62) comprend un bras télescopique (64) qui peut être fixé dans une pluralité de positions télescopiques.

11. Poste de travail selon la revendication 10,
**caractérisé en ce que** la pluralité de positions télescopiques comprend une position télescopique d'arrimage de l'unité de commande manuelle (62).

12. Poste de travail selon l'une des revendications 1 à 11,
**caractérisé en ce que** l'unité de commande manuelle (62) comprend un groupe de commande (80) supporté de manière pivotante sur un bras de support (64).

13. Poste de travail selon la revendication 12,
**caractérisé en ce que** le groupe de commande (80) est pivotant par rapport au bras de support (64) autour d'un quatrième axe de pivotement (A₄) sensiblement parallèle à la zone d'ancrage au plancher (14).

14. Poste de travail selon la revendication 12 ou 13,
**caractérisé en ce que** le groupe de commande (80) est positionnable dans une position de pivotement d'arrimage et au moins une position de pivotement de travail par rapport au bras support (64).

15. Poste de travail selon la revendication 9 et la revendication 11, ou l'une des revendications 12 à 14, si celles-ci dépendent de la revendication 9 et de la revendication 11,
**caractérisé en ce que** l'unité de commande manuelle (62) ne peut sensiblement être fixée à la deuxième zone de support (36) que si la deuxième zone de support (36) est disposée en position de pivotement d'arrimage et si l'unité de commande manuelle (62) est disposée en position télescopique d'arrimage.

16. Poste de travail selon la revendication 14 et la revendication 15,
**caractérisé en ce que** l'unité de commande manuelle (62) ne peut sensiblement être fixée à la deuxième zone de support (36) que si le groupe de commande (80) est positionné en position de pivotement d'arrimage par rapport au bras de support (64).
